# EUROPEAN PATENT APPLICATION

(11) **EP 3 153 032 A1**
(43) Date of publication of application: **12.04.2017**
(21) Application number: 15803384.5
(22) Date of filing: 01.06.2015
(51) Int. Cl.: A23L 29/30

(54) **METHOD FOR PRODUCING A NATURAL SWEETENER**

(30) Priority: 03.06.2014 ES 201430849
(71) Applicant: Authentically European, S.L., 28770 Colmenar Viejo (Madrid) (ES)
(72) Inventor: LÓPEZ MARTÍN, José Manuel, 28770 Colmenar Viejo (Madrid) (ES); GONZÁLEZ BOLULLO, Santiago, 28770 Colmenar Viejo (Madrid) (ES); BEZARES BOLULLO, Jorge, 28770 Colmenar Viejo (Madrid) (ES); LÓPEZ RUIZ, José Manuel, 28770 Colmenar Viejo (Madrid) (ES)
(74) Representative: Botella Reyna, Antonio
(86) International application number: PCT/ES2015/070428
(87) International publication number: WO 2015/185775

(57) **Abstract**

The invention relates to a method based o mixing honey as a raw material and maltodextrin, in proportions of approximately 80% honey and approximately 20% maltodextrin. The mixture is stored in an inert atmosphere and is subjected to a vacuum drying process in order to obtain a pasty mass which is ground so as to obtain a grain-type product, corresponding to the desired final product. The natural sweetener obtained in used as a product to sweeten all types of drinks and food.

## Description

### OBJECT OF THE INVENTION

The present invention relates to a method for producing a natural sweetener using natural honey as a raw material and adding maltodextrin as a sweet component.

The object of the invention is to provide to the market and the general public a product which can be used as a natural sweetener in drinks, foods, and in all types of coffees, teas, yoghurts, pastries, milk, etc.

In short, it is a natural sweetener product that is a healthy alternative to sugar, with a taste similar to honey, that is highly beneficial to one's health.

### BACKGROUND OF THE INVENTION

Although no method is known for producing a natural sweetener based on honey with the characteristics of the product obtained by the present invention, it is convenient to point out the properties and characteristics of honey.
In this regard, it has been shown that honey:
- Activates the elimination of up to 35% of alcohol, as it activates liver metabolism, and is also optimal for eliminating toxins and protecting the liver from medications and unbalanced diets.
- Increases natural energy levels, and is highly beneficial for curing anemia, fatigue, stress, in times of exams or strenuous exercise.
- Tones tired cardiac muscles and helps eliminate liquid retained by persons with heart problems.
- Alleviates heartburn and pain due to ulcers, being quickly absorbed since it is a food predigested by bees.
- Contains energy-rich sugars, vitamins and minerals, active enzymes, amino acids, organic acids, antibiotic substances, pollen, acetylcholine and water, can be used to sweeten teas, drinks and even foods, and is ideal as a remedy for alleviating throat pains in combination with lemon.
- Relieves coughing and smoothens the throat in combination with other products.
- Alleviates allergies, in appropriate daily doses, as natural vaccination against allergies.
- Is an effective laxative, combating constipation, and is also an anti-oxidant due to its high content in phenolic acids and enzymes such as catalase, and glucose oxidase, which can protect cells from free radicals.
- Helps prevent the risk of hypoglycemia, for example in endurance races, as well as favoring oxidation of fats and glycogen release, eliminating toxins accumulated due to effort.
- Is a prebiotic food, containing specific oligosaccharides that increase the bacterial flora population in a natural manner, improving digestive health and strengthening the immune system.
- Is a calcium supplement, as it can increase calcium absorption helping to increase bone mass, as it has been shown that honey increases calcium absorption in rats by approximately 33.6%, probably due to the content in carbohydrates, glucose, fructose and rafinose.
- Is an anticarcinogenic product, as it has been discovered that natural honey and its derivatives reduce tumor growth and prevent metastasis when injected in laboratory rat tumors, making it a sweet anti-tumoral treatment.

In view of all the benefits that honey can provide, the natural sweetener obtained from honey that is the object of the present invention can be considered to be a highly beneficial product.

### DESCRIPTION OF THE INVENTION

The method for producing a natural sweetener according to the invention is based on mixing honey as raw material and maltodextrin as sweet component in a ratio of 80% honey and 20% maltodextrin, such that the mixture is stored in buffer tanks, in an inert atmosphere, and then the mixture is vacuum dried on a band, finally grinding the dry product to obtain a granulated product that is packaged and stored until final distribution.

After extracting the moisture and in order to later convert the product into granules, it is necessary to freeze the honey to approximately -90°C, such that once the moisture is extracted a pasty mass is obtained that is stored for subsequent grinding and obtaining the granule form, then subjected to a pressure from 2 to 3 atmospheres to prevent the product from compacting and allow easy handling.

The final product obtained, as a natural sweetener, is particularly applicable in drinks and foods of all types where the product to consume must have a sweet taste; the maltodextrin provides this taste, as it is known that maltodextrin is a derivative of starch, general obtained from corn, wheat or potato, where starch is a giant molecule formed by long chains in which glucose is a minor part, such that when the starch is fully degraded the glucose solution remains, known as dextrose in its granule form.

Maltodextrin consists in 1% dextrose, 3% maltose and 96% trioses and polysaccharides, such that this combination of carbohydrates provides long-term energy, since the organism degrades it into glucose molecules that are absorbed quickly.

In this way energy is released in a gradual manner providing long-term energy with a fast and gradual absorption, easily digested to allow quick energy recovery.

Obviously, the freeze-drying process to which the honey is subjected in order to grind it and obtain a granulated form does not imply the loss of any of the properties of honey.

The final product obtained, as a natural sweetener, is a product that will revolutionize the world of sugar substitutes, since it is obtained by the process of freeze-drying honey and subsequent granulation thereof, providing a natural and healthy alternative to sugar with the taste of honey and highly beneficial to health, since it is a source of vitamins and is an ideal ally in the fight against excessive weight, helping prevent diseases such as diabetes.

Designed with the same formats as sugar, horeca and retail channels, the natural sweetener of the invention is ideal for sweetening coffee, tea or pastries in cafeterias, bars and pastry shops, as well as for satisfying the needs of customers in small, medium and large retail establishments.

In short, consumers will permanently incorporate to their diet honey from bees, which among other properties has antiseptic, strengthening, calming, laxative, diuretic and bactericidal properties, providing an outstanding natural vitamin complement.

As a prebiotic food, it contains oligosaccharides, increasing bacterial flora in a natural manner, improving digestive health and strengthening the immune system.

Lastly, as the natural sweetener is based on honey as the raw material, in addition to the aforementioned properties it is useful against wounds, burns and allergies, reduces cholesterol, prevents cardiovascular disorders and efficiently combats constipation.

## Claims

1. Method for producing a natural sweetener **characterized by** comprising the following operational stages:
- mixing honey as a raw material and maltodextrin as a sweet component in ratios on the order of 80% honey to 20% maltodextrin;
- storing the mixture in an inert atmosphere;
- vacuum drying the mixture after storage in an inert atmosphere in order to extract the moisture contained in the honey and obtain a pasty mass;
- grinding the pasty mass obtained by treating the mixture after drying to obtain a granulated product corresponding to the desired natural sweetener;
- packaging and storing the product.

2. Method for producing a natural sweetener according to claim 1, **characterized in that** after the moisture extraction process the produce is subjected to pressure with the honey frozen to about -90°C.

3. Method for producing a natural sweetener according to claim 2, **characterized in that** the pressure applied to the product once dry is between 2 and 3 atmospheres.

4. Method for producing a natural sweetener according to claim 1, **characterized in that** the maltodextrin is composed of 1% dextrose, 3% maltose and 96% trioses and polysaccharides.
